# FASCICULE DE BREVET EUROPEEN

(11) **EP 2 544 621 B1**
(45) Date de publication et mention de la délivrance du brevet: **18.11.2020**
(21) Numéro de dépôt: 11704946.0
(22) Date de dépôt: 28.01.2011
(51) Int. Cl.: A61C 3/02, A61C 8/00

(54) **ENSEMBLE D'UN IMPLANT DENTAIRE ET D'UN ELEMENT PROTHETIQUE**
ZAHNIMPLANTATEINHEIT UND PROTHESEELEMENT
ASSEMBLY OF A DENTAL IMPLANT AND A PROSTHETIC ELEMENT

(30) Priorité: 28.01.2010 EP 10290044
(43) Date de publication de la demande: 16.01.2013
(73) Titulaire: Sudimplant, 31500 Toulouse (FR)
(72) Inventeur: BENHAMOU, Olivier, B-1060 Bruxelles (BE)
(74) Mandataire: Quintelier, Claude
(86) Numéro de dépôt international: PCT/EP2011/051269
(87) Numéro de publication internationale: WO 2011/092315

(56) Documents cités:
- WO-A1-01/80768
- US-A- 5 961 328
- US-B1- 6 273 720
- US-B1- 6 464 500

## Description

La présente invention concerne une ensemble d'un implant dentaire et d'un élément prothétique, lequel implant dentaire comporte un corps agencé pour être implanté dans l'os des maxillaires, lequel élément prothétique comporte une partie intra-implantaire et une partie extra-implantaire, lequel corps comprend une cavité interne destinée à recevoir la partie intra-implantaire de l'élément prothétique, lequel élément prothétique est un élément monobloc dont la partie intra-implantaire est formée par un tenon, agencé pour être scellé ou collé dans la cavité, ladite cavité comporte une section d'entrée configurée en polygone, ledit élément prothétique comporte à hauteur de la jonction entre les parties intra- et extra-implantaires une partie de jonction configurée en polygone de telle façon que la partie de jonction peut s'emboîter dans la section d'entrée, ladite partie intra-implantaire possède une paroi lisse et est pourvue d'au moins une rainure d'évacuation,.

Un tel ensemble est connu de brevet WO 01/80768. Suivant l'ensemble connu, l'implant comporte un corps ayant une cavité dans laquelle vient se placer un élément prothétique formé par une fausse dent. L'élément prothétique est collé dans la cavité de l'implant. La configuration en polygone de la section d'entrée et d'un segment de l'élément prothétique empêche ce dernier de tourner lorsqu'il sera introduit dans la cavité..

Un implant dentaire est une racine artificielle qui a pour rôle de remplacer une racine de dent naturelle. Sa mise en place chirurgicale consiste à réaliser, par forage dans l'os des maxillaires, une alvéole dans laquelle sera vissé ou impacté l'implant. Après un temps de cicatrisation de plusieurs semaines, cet implant pourra être mis en fonction par la mise en place d'un composant prothétique qui supportera une couronne.

Il existe deux approches chirurgicales : une technique dite en deux temps opératoires, où l'implant est enfoui dans l'os et recouvert par la gencive pendant le temps de la cicatrisation osseuse. Cette cicatrisation osseuse terminée, lors d'un second temps opératoire, on incisera la gencive au-dessus de l'implant pour mettre à nu l'implant, et y fixer une vis de cicatrisation à trajet transgingival, permettant ainsi la cicatrisation de la gencive. Dans ce cas, la gencive va cicatriser autour de cette vis de cicatrisation et non autour de l'implant. Après cicatrisation gingivale, cette vis est déposée et remplacée par un élément prothétique sur lequel se fixera la couronne. On parle dans ce cas de cicatrisation de 2^{ième} intention au niveau gingival.

La technique en un temps opératoire consiste à poser un implant de conception différente, car ce dernier aura à la fois une partie endo-osseuse et une partie transgingivale. Dans cette configuration, on obtiendra une cicatrisation de la gencive de première intention autour de la partie transgingivale de l'implant. La sertissure, dite attache épithéliale, est acquise définitivement dans cette technique. Cette technique, où l'implant est d'emblée en relation avec la cavité buccale, n'implique donc pas un second temps opératoire.

Par l'usage d'un élément prothétique monobloc (système non transvissé) le principe susdit utilisé en odontologie conventionnelle a été transposé à l'implantologie orale. En effet, l'élément monobloc peut, grâce à sa partie intra-implantaire, être facilement introduit dans la cavité de l'implant dentaire, de la même façon qu'en odontologie conventionnelle. De plus, puisque la partie extra-implantaire est configurée sous forme d'un organe d'attachement, le chirurgien-dentiste peut sans formation supplémentaire y appliquer la prothèse dentaire, par exemple sous forme d'une couronne.

Un inconvénient de l'ensemble connu est toutefois que le collage ou le scellement doit se faire avec une grande précision car la couche de ciment ou de colle sur les surfaces de contact à hauteur du col de l'implant doivent être très fines pour permettre d'avoir encore et toujours un contact intime entre le matériau de l'implant et celui de l'élément prothétique. Ceci rend l'implantation complexe et requière du temps.

L'invention a pour but de simplifier la pose d'implant dentaire et d'offrir un ensemble d'un implant dentaire et d'un élément prothétique où l'élément prothétique peut être posé par un chirurgien-dentiste sans que ce dernier soit un spécialiste en la matière.

L'invention est définie dans les revendications.

A cette fin, un ensemble suivant l'invention est caractérisé en ce que la partie extra-implantaire est configurée sous forme d'un organe d'attachement agencé pour y appliquer directement une prothèse dentaire, ladite au moins une rainure d'évacuation se prolonge sur ladite partie de jonction et sur une distance inférieure à 1cm sur la partie extra-implantaire et est agencée pour dégager un excédent de ciment ou de colle ainsi que l'air présent lors du scellement ou du collage. La paroi lisse permet l'usage d'une technique de collage ou de scellement pour fixer l'élément prothétique dans la cavité, alors que la rainure d'évacuation permet le dégagement de ciment ou de colle excédentaire et d'air lors du scellement ou du collage. On obtient ainsi une zone de dégagement tout à fait propre de l'excédent de ciment ou de colle et un scellement ou collage dans les règles de la partie intra-implantaire.

Une première forme de réalisation préférentielle d'un ensemble suivant l'invention est caractérisée en ce que ladite cavité comporte un taraudage interne qui s'étend sur au moins une partie de la profondeur de la cavité. Ce taraudage permet d'y visser une vis de cicatrisation ou de couverture.

Une deuxième forme de réalisation préférentielle d'un ensemble suivant l'invention est caractérisée en ce que ladite cavité comporte une gorge de rétention appliquée dans sa paroi interne et agencée pour recevoir un élément ancillaire formant partie d'un mandrin agencé pour retenir ledit implant. Ceci facilite considérablement la pose de l'implant.

Une troisième forme de réalisation préférentielle d'un ensemble suivant l'invention est caractérisée en ce la partie extra-implantaire possède une géométrie tronconique. Ceci permet la pose de la prothèse dentaire.

Une quatrième forme de réalisation préférentielle d'un ensemble suivant l'invention est caractérisée en ce la partie extra-implantaire est pourvue d'un élément d'attachement. Ceci permet une stabilisation d'un appareil amovible.

Une cinquième forme de réalisation préférentielle d'un ensemble suivant l'invention est caractérisée en ce que ledit implant est fabriqué soit en métal, soit en céramique, soit en un matériau composite, soit en peek ou en une combinaison de ces matériaux, ledit élément prothétique est fabriqué soit en métal, soit en céramique, soit en peek, soit en un matériau calcinable, soit en un matériau composite ou une combinaison de ces matériaux. En particulier l'usage d'un matériau calcinable permet une large flexibilité de réalisation.

Une sixième forme de réalisation préférentielle d'un ensemble suivant l'invention est caractérisée en ce qu'il comporte un foret ayant un profil épousant celui de l'implant, ledit foret comporte une première et une deuxième lame disposées sensiblement perpendiculairement l'une à l'autre, une extrémité de la deuxième lame étant décalée par rapport à une extrémité de la première lame. Ceci permet un meilleur forage dans l'os des maxillaires.

Une septième forme de réalisation préférentielle d'un ensemble suivant l'invention est caractérisée en ce qu'il comporte également un mandrin ayant une tête configurée en polygone et agencée pour être introduite dans la section d'entrée de la cavité. Ainsi, cette extrémité du mandrin épouse parfaitement la forme de la section d'entrée de la cavité ce qui facilite la pose de l'implant dentaire.

L'invention sera maintenant décrite plus en détail à l'aide des dessins qui illustrent des formes de réalisation préférentielles d'un ensemble suivant l'invention. Dans les dessins :
la figure 1 montre une vue extérieur d'un implant dentaire faisant partie d'un ensemble suivant l'invention,
la figure 2 montre une vue en coupe dans le sens longitudinal de l'implant dentaire illustré à la figure 1;
les figures 3 a et b illustrent un moignon faisant partie d'un ensemble suivant l'invention;
la figure 4 illustre un mandrin faisant partie de l'ensemble;
la figure 5 illustre une vis de couverture faisant partie de l'ensemble;
la figure 6 illustre une vis de cicatrisation faisant partie de l'ensemble;
la figure 7 illustre un foret faisant partie de l'ensemble; et
la figure 8 illustre un élément d'attachement faisant partie de l'ensemble.

Dans les dessins une même référence a été attribuée à un même élément ou à un élément analogue.

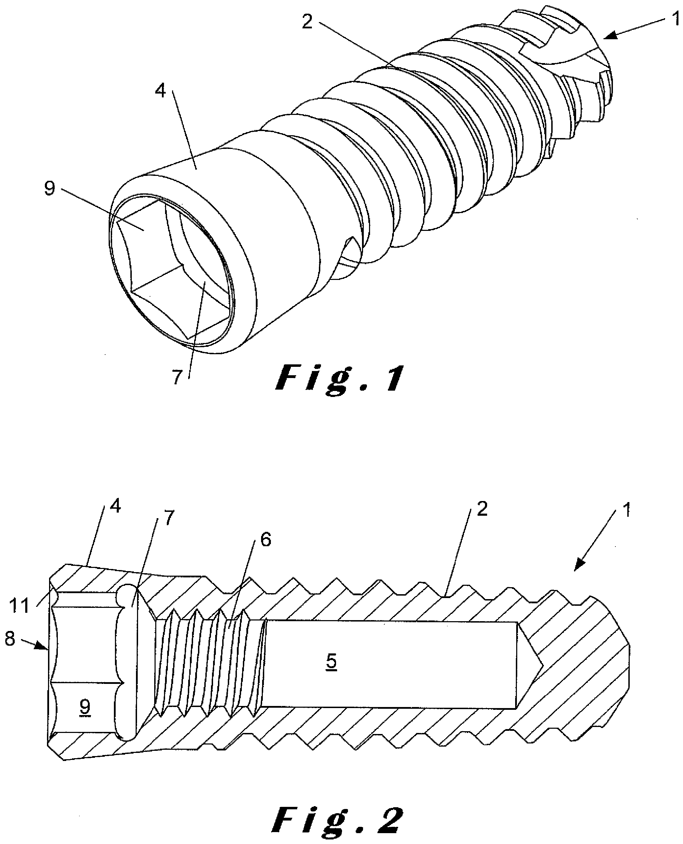

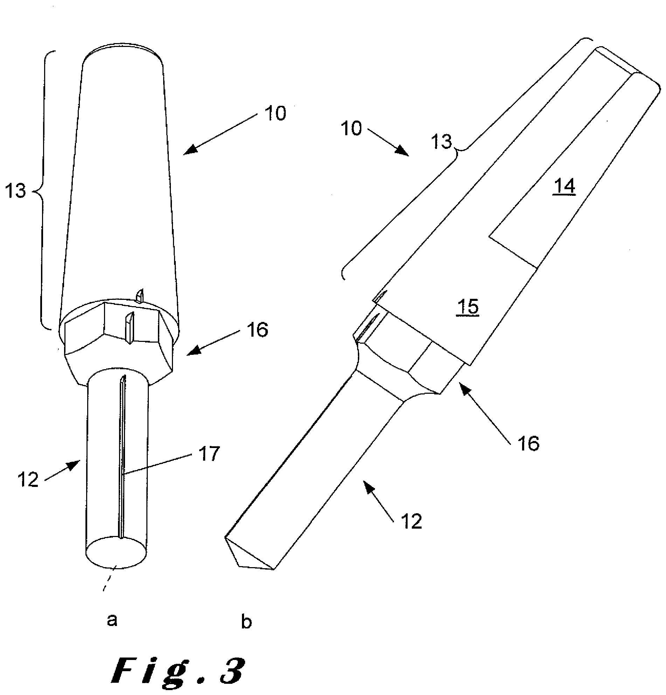

L'ensemble suivant l'invention comporte un implant dentaire 1 (voir figure 1) et un élément prothétique 10 (voir figure 3). L'implant dentaire 1 illustré à la figure 1 comporte un corps agencé pour être implanté et ayant une forme cylindro-conique avec de préférence une conicité sur 4 mm à l'apex dont 2,35 mm de base (3) cruciforme, avec une partie évasée (4) d'une hauteur de 2 mm. Le diamètre au col peut aller de 2,5 à 7 mm, mais plus particulièrement entre 2, 9 et 5,7 mm. La longueur de l'implant dentaire se décline de 5 à 17 mm, en particulier de 6 à 15,5 mm. Mise à part la forme cylindro-conique, une forme cylindrique peut également être envisagée. L'implant dentaire illustré à la figure 1 peut être utilisé tant pour une technique dite en deux temps opératoire que pour une technique dite en un temps opératoire. A cette fin, la partie évasée 4 ne sera pas enfouie dans l'os, mais plutôt dans la gencive après la pose de l'implant dentaire lors de l'utilisation de !a technique dite en un temps, alors que cette même partie évasée sera enfuie dans l'os lors de l'utilisation de la technique dite en deux temps. La paroi externe de l'implant dentaire comporte un taraudage 2 permettant de visser l'implant dentaire dans l'os des maxillaires.

L'implant dentaire 1 est par exemple fabriqué en métal, comme du titane, en zircone, ou un hybride zircone-titane. Il peut également être fabriqué en peek, en céramique ou en un matériau composite, ou en une combinaison de ces matériaux.

La figure 2 illustre une vue en coupe dans le sens longitudinal d'un implant dentaire suivant l'invention. Le corps de l'implant dentaire comprend une cavité interne 5, ayant une section d'entrée 8, située dans le col 4 de l'implant. Cette section d'entrée 8 est configurée en polygone 9, en particulier en six pans. Il va de soi que d'autres configurations de polygone qu'un six pans peuvent être envisagées. Le six pans a néanmoins l'avantage qu'il permet l'usage d'outils classiques tels qu'un mandrin ou une clef Allen. De préférence, cette configuration en polygone à la même dimension, quelle que soit la taille de l'implant dentaire, permettant ainsi d'utiliser un même instrument pour la pose de l'implant dentaire.

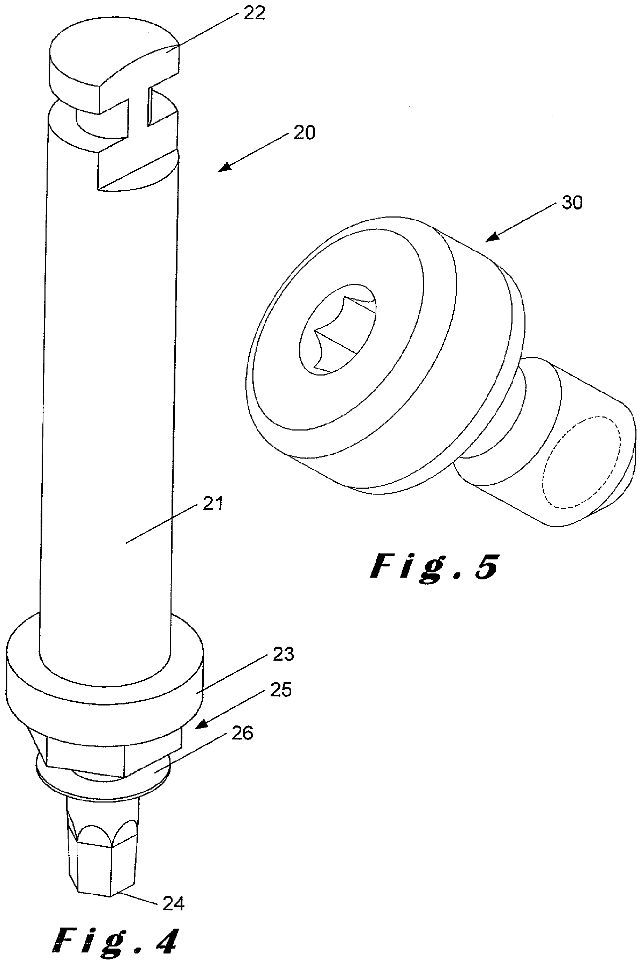

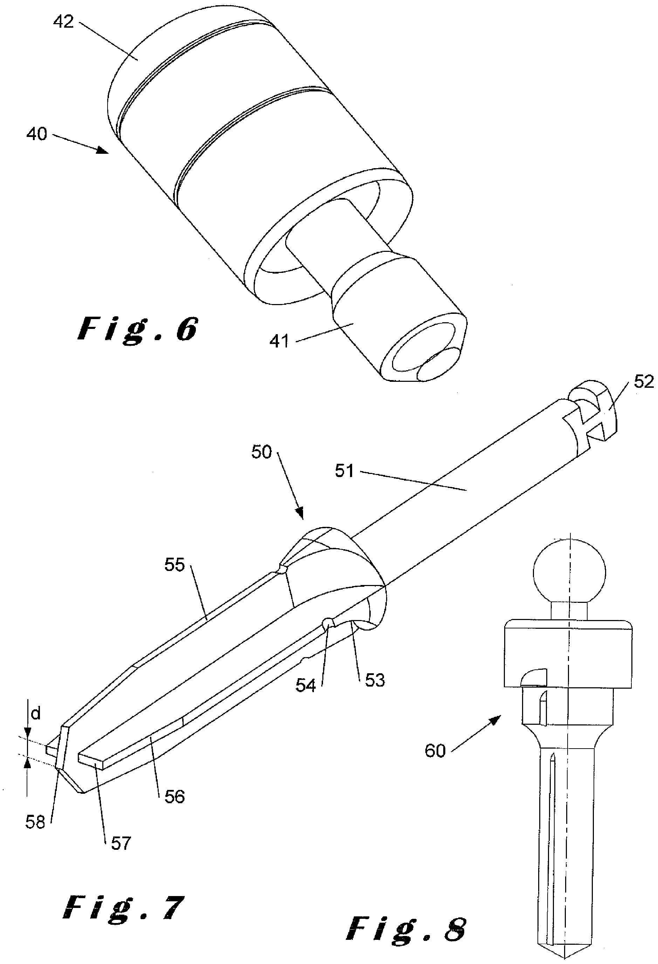

Juste en dessous de cette configuration en polygone 9 se trouve une gorge de rétention 7 appliquée dans la paroi interne de la cavité et agencée pour recevoir une partie d'un mandrin retenant l'implant, comme il sera décrit en détail ci-dessous. Cette gorge de rétention a de préférence une hauteur de 0,5 mm et est placée entre la section d'entrée et un taraudage interne 6, qui s'étend à l'intérieur de la cavité 5 sur au moins une partie de la profondeur de la cavité. Le taraudage interne 6 sert à recevoir le pas de vis d'une vis de couverture, comme illustré à la figure 5, ou une vis de cicatrisation, comme illustré à la figure 6. Si le taraudage interne sert uniquement à recevoir une vis de couverture ou de cicatrisation, il s'étend sur une longueur d'environ 3 mm et possède par exemple un filet M2 ou M2,5. Par contre, le taraudage interne pourrait également être utilisé pour y visser l'élément prothétique, dans lequel cas le taraudage interne s'étendra sur une distance située entre 0,2 à 15 mm.

La cavité interne 5 s'étend sur une distance située entre 3 et 15 mm, plus particulièrement entre 7 et 11 mm et possède un diamètre situé entre 1 et 4 mm. De préférence, le col de l'implant 4 a un état de surface lisse, du fait de la possibilité de l'enfouir ou non dans l'os, évitant ainsi une rétention de plaque bactérienne. Par contre, la partie pourvue du taraudage externe 2 aura de préférence un état de surface rugueux pour améliorer l'intégration de l'implant dans l'os. De préférence, la partie évasée 4 du col de l'implant comporte un biseau 11 qui est configuré de telle façon à rejoindre l'élément prothétique lorsque monté dans l'implant dentaire. Ceci permet une bonne assise à la future prothèse.

Les figures 3 a et b illustrent une forme de réalisation préférentielle d'un élément prothétique faisant partie d'un ensemble suivant l'invention. L'élément prothétique 10 monobloc est par exemple formé par un faux-moignon dans sa partie extra-implantaire 13 et par un tenon cylindrique à rainure dans sa partie intra-implantaire 12. La partie intra-implantaire est agencée pour être introduite dans la cavité 5 de l'implant dentaire. La partie intra-implantaire est formée par un tenon agencé pour être scellée ou collée dans la cavité. Le tenon est de préférence de forme cylindrique, mais peut également avoir d'autres formes comme rectangulaire, hexagonale, conique ou cylindro-conique. Le cas échéant, l'élément prothétique peut, dans sa partie intra-implantaire, être pourvu d'un pas de vis compatible avec le taraudage interne présent dans la cavité 5.

L'élément prothétique monobloc est configuré dans sa partie extra-implantaire sous la forme d'un faux moignon 14-15 agencé pour y recevoir directement une prothèse dentaire. Ce faux moignon est par exemple formé par un méplat 14 appliqué sur le moignon. Ce méplat fait partie d'une géométrie tronconique de la partie extra-implantaire et ne s'étend que sur une partie d'à peu près deux tiers de la hauteur de cette partie extra-implantaire. Ce méplat assure un blocage anti-rotationel de la prothèse.

L'élément prothétique monobloc comporte à hauteur de la jonction entre les parties intra- et extra-implantaires de préférence une partie de jonction 16 configurée en polygone, de telle façon que la partie de jonction peut s'emboîter dans la section d'entrée 8 de la cavité, également configurée en polygone 9. Ainsi, quand les deux configurations en polygone sont emboîtées l'une dans l'autre lorsque l'élément prothétique est posé dans l'implant dentaire, une rotation de cet élément prothétique dans la cavité sera empêchée grâce à la prise du polygone du moignon dans le polygone de la section d'entrée de l'implant.

La partie intra-implantaire de l'élément prothétique possède une paroi essentiellement lisse et pourvue d'une rainure d'évacuation 17 qui s'étend sur toute la longueur de cette partie intra-implantaire. La rainure 17 se prolonge de préférence sur la partie de jonction 16 et sur une distance inférieure à 1 cm sur la partie extra-implantaire. La fonction de cette rainure d'évacuation sera décrite ci-dessous.

L'élément prothétique est de préférence fabriqué en métal comme par exemple du titane. Il peut également être fabriqué en céramique, en peek ou en un matériau calcinable ou en une combinaison de ces matériaux. De préférence, le moignon a une base de 2,5 à 8 mm avec une hauteur située entre 5 et 15 mm pour la partie extra-implantaire et entre 3 et 15 mm pour la partie intra-implantaire.

L'élément prothétique monobloc est scellé ou collée dans la cavité. A cette fin, on utilise une colle ou un ciment dentaire qui sera appliquée sur la partie intra-implantaire avant d'introduire l'élément prothétique dans la cavité de l'implant dentaire. Cet élément prothétique est glissé dans la cavité et l'excédent de ciment ou de colle ainsi que l'air présent dans la cavité peuvent être dégagés grâce à la présence des rainures d'évacuation 17. Après avoir scellé ou collé cet élément prothétique monobloc, la prothèse dentaire peut être fixée à sa partie extra-implantaire.

La figure 4 illustre un mandrin 20 faisant partie d'un ensemble suivant l'invention. Le mandrin permet la préhension et la pose de l'implant dentaire 1. Le mandrin 20 comporte un organe de couplage 22 servant à y coupler un contre-angle ou une pièce à main pour manipuler le mandrin. Ce dernier comporte également une tige 21 qui se prolonge d'abord dans une partie plus épaisse 23 et puis en une tête de prise 25 qui est configurée en polygone. Cette configuration en polygone rejoint celle (9) qui se trouve dans la section d'entrée 8 de l'implant dentaire 1, de telle façon que la tête 25 puisse prendre prise dans la configuration en polygone de l'implant dentaire permettant ainsi d'entrainer l'implant dentaire pour le visser dans l'os des maxillaires à l'aide du mandrin.

Le mandrin 20 comporte également un petit disque 26 décalé par rapport à la partie 25 configurée en polygone. Le petit disque est dimensionné de telle façon à pouvoir venir se loger dans la gorge de rétention 7 de l'implant dentaire. Ceci permet de fixer temporairement l'implant dentaire au mandrin lors de l'introduction de l'implant dentaire dans la bouche d'un patient à l'aide du mandrin. Le petit disque est de préférence fabriqué en une matière semi-rigide comme du silicone, du caoutchouc ou du peek, donnant ainsi une flexibilité au petit disque, ce qui permet de non seulement facilement l'introduire dans la gorge de rétention, mais également de le ressortir après la pose de l'implant dentaire.

De préférence, le mandrin 20 comporte également à son extrémité un élément de prise 24, agencé pour prendre prise dans une vis de couverture ou une vis de cicatrisation comme illustré aux figures 5 ou 6. L'élément de prise est à cette fin configuré par exemple comme un polygone à six pans ou comme un tournevis plat ou en croix en fonction de ce qui est utilisé pour les vis de couverture ou de cicatrisation. Ainsi, le chirurgien dentiste peut utiliser un même mandrin pour la préhension de l'implant dentaire, son implantation dans l'os des maxillaires, et sa capacité à visser la vis de couverture ou de cicatrisation, ce qui évite de devoir chaque fois prendre un autre instrument.

De préférence, l'ensemble suivant l'invention comporte également la vis de couverture 30 reprise à la figure 5 et/ou la vis de cicatrisation 40 reprise à la figure 6. Ces vis sont pourvues d'un pas de vis, agencé pour être vissé dans le taraudage. La forme de la vis de couverture ou de cicatrisation permet de recouvrir le col de l'implant et son biseau.

La figure 7 illustre un exemple d'un foret 50 faisant, de préférence, partie d'un ensemble suivant l'invention. Tout comme le mandrin 20, le foret comporte un organe de couplage 52 et une tige 51. Le foret possède un profil épousant celui de l'implant dentaire, ce qui permet de forer dans l'os des maxillaires à la dimension correspondant à celle de l'implant dentaire. Ceci permet d'utiliser un même foret pour la technique dite en un temps et celle dite en deux temps. L'alésoir permet de forer plus profondément, permettant ainsi d'enfoncer la partie évasée 4 de l'implant dentaire dans l'os des maxillaires.

Comme illustré à la figure 7, le foret comporte une première 55 et une deuxième 56 lame disposées sensiblement perpendiculairement l'une à l'autre. Une extrémité 57 de la deuxième lame étant décalée par rapport à une extrémité 58 de la première lame. Ce décalage procure un meilleur effet coupant lors du forage dans l'os des maxillaires, car la première lame 55 sert de lame d'attaque alors que la deuxième lame 56 sert plus pour l'alésage du trou à forer. De préférence, le foret possède une forme cylindro-conique épousant ainsi celle de l'implant dentaire à placer. Le foret comporte de préférence un alésoir 53 disposé au-dessus des lames.

Le foret possède un diamètre de préférence situé entre 2 et 7 mm, plus particulièrement entre 2.7 et 6 mm. Il est fabriqué en acier inoxydable, en titane ou en céramique. Le foret comporte de préférence un repère 54 situé entre l'alésoir 53 et les lames 55 et 56, permettant ainsi à l'utilisateur d'identifier sa limite de forage en fonction du choix de sa technique implantaire, en 1 ou 2 temps opératoires.

La figure 8 illustre un attachement sphérique 60 dont la forme de l'épaulement permet de recouvrir le col de l'implant. Ainsi, cet attachement sphérique pourra non seulement être scellé ou collé dans l'implant dentaire, mais pourra également être utilisé comme élément de stabilisation d'une prothèse amovible.

## Revendications

1. Ensemble d'un implant dentaire (1) et d'un élément prothétique (10), lequel implant dentaire comporte un corps agencé pour être implanté dans l'os des maxillaires, lequel élément prothétique comporte une partie intra-implantaire (12) et une partie extra-implantaire (13), lequel corps comprend une cavité interne (5) destinée à recevoir la partie intra-implantaire de l'élément prothétique, lequel élément prothétique est un élément monobloc dont la partie intra-implantaire est formée par un tenon, agencé pour être scellé ou collé dans la cavité, ladite cavité comporte une section d'entrée (8) configurée en polygone (9), ledit élément prothétique comporte à hauteur de la jonction entre les parties intra- et extra-implantaires une partie de jonction (16) configurée en polygone de telle façon que la partie de jonction peut s'emboîter dans la section d'entrée, ladite partie intra-implantaire possède une paroi lisse et est pourvue d'au moins une rainure d'évacuation (17), **caractérisé en ce que** la partie extra-implantaire est configurée sous forme d'un organe d'attachement agencé pour y appliquer directement une prothèse dentaire, ladite au moins une rainure d'évacuation se prolonge sur ladite partie de jonction et sur une distance inférieure à 1cm sur la partie extra-implantaire et est agencée pour dégager un excédent de ciment ou de colle ainsi que l'air présent lors du scellement ou du collage .

2. Ensemble suivant la revendication 1, **caractérisé en ce que** la ou les rainure(s) (17) qui se prolonge(nt) sur la partie extra-implantaire se prolonge(nt) sur une distance située entre 2 et 3 mm.

3. Ensemble suivant la revendication 1 ou 2, **caractérisé en ce que** ladite cavité comporte un taraudage interne qui s'étend sur au moins une partie de la profondeur de la cavité.

4. Ensemble suivant l'une des revendications 1 à 3, **caractérisé en ce que** ladite cavité comporte une gorge de rétention (7) appliquée dans sa paroi interne et agencée pour recevoir un élément ancillaire formant partie d'un mandrin (20) agencé pour retenir l'implant.

5. Ensemble suivant la revendication 4, **caractérisé en ce que** ladite gorge de rétention (7) est placée entre la section d'entrée et le taraudage interne.

6. Ensemble suivant l'une des revendications 1 à 5, **caractérisé en ce que** ledit implant possède une géométrie essentiellement cylindro-conique, ladite cavité s'étend de façon coaxiale à un axe central de l'implant.

7. Ensemble suivant l'une des revendications 1 à 6, **caractérisé en ce que** la partie extra-implantaire possède une géométrie tronconique.

8. Ensemble suivant la revendication 7, **caractérisé en ce que** la partie extra-implantaire est chanfreinée sur une partie de sa longueur.

9. Ensemble suivant l'une des revendications 1 à 3, **caractérisé en ce que** la partie extra-implantaire est pourvue d'un attachement sphérique.

10. Ensemble suivant l'une des revendications 1 à 9, **caractérisé en ce que** ledit implant est fabriqué soit en métal, soit en céramique, soit en un matériau composite, soit en peek ou en une combinaison de ces matériaux, ledit élément prothétique est fabriqué soit en métal, soit en céramique, soit en peek, soit en un matériau calcinable, soit en un matériau composite ou une combinaison de ces matériaux.

11. Ensemble suivant l'une des revendications 1 à 10, **caractérisé en ce qu'**il comporte également un foret (50) ayant un profil épousant celui de l'implant.

12. Ensemble suivant la revendication 11, **caractérisé en ce que** ledit foret (50) comporte une partie supérieure pourvue d'un alésoir.

13. Ensemble suivant la revendication 11 ou 12, **caractérisé en ce que** ledit foret comporte une première et une deuxième lame disposées sensiblement perpendiculairement l'une à l'autre, une extrémité de la deuxième lame étant décalée par rapport à une extrémité de la première lame.

14. Ensemble suivant l'une des revendications 1 à 3, **caractérisé en ce qu'**il comporte également une vis de couverture (30) ayant un pas de vis agencé pour être vissé dans le taraudage.

15. Ensemble suivant l'une des revendications 1 à 3, **caractérisé en ce qu'**il comporte également une vis de cicatrisation (40) ayant un pas de vis agencé pour être vissé dans le taraudage.

16. Ensemble suivant la revendication 1 ou 2, **caractérisé en ce qu'**il comporte également un mandrin (20) ayant une tête configurée en polygone et agencée pour être introduite dans la section d'entrée de la cavité.

17. Ensemble suivant la revendication 4 et 5, **caractérisé en ce qu'**il comporte également un mandrin (20) comportant une tête de prise agencée pour s'insérer dans la gorge de rétention de l'implant dentaire.

18. Ensemble suivant la revendication 14 ou 15, **caractérisé en ce qu'**il comporte également un mandrin (20) comportant une extrémité pourvue d'un élément de prise (24), agencé pour prendre prise dans ladite vis de couverture (30) ou vis de cicatrisation (40).

## Patentansprüche

1. Einheit (1) eines Zahnimplantates und eines Protheseelementes (10), wobei das Zahnimplantat einen Körper umfasst, der angeordnet ist, um in den Kieferknochen implantiert zu sein, wobei das Protheseelement einen Teil innerhalb des Implantats (12) und einen Teil außerhalb des Implantats (13) umfasst, wobei der Körper einen inneren Hohlraum (5) umfasst, der ausgelegt ist, um den Teil innerhalb des Implantats des Protheseelements aufzunehmen, wobei das Protheseelement ein Element aus einem Block ist, dessen Teil innerhalb des Implantats durch einen Stift gebildet ist, der angeordnet ist, um im Hohlraum versiegelt oder geklebt zu sein, wobei der Hohlraum einen Eingangsabschnitt (8) umfasst, der als Polygon (9) konfiguriert ist, wobei das Protheseelement in Höhe der Verbindung zwischen dem Teil innerhalb und außerhalb des Implantats einen Verbindungsteil (16) umfasst, der derart als Polygon konfiguriert ist, dass der Verbindungsteil in den Eingangsabschnitt passen kann, wobei der Teil innerhalb des Implantats eine glatte Wand besitzt und mit mindestens einer Ableitungsnut (17) ausgestattet ist, **dadurch gekennzeichnet, dass** der Teil außerhalb des Implantats in Form eines Befestigungsorgans konfiguriert ist, das angeordnet ist, um direkt eine Zahnprothese darauf anzubringen, wobei sich die mindestens eine Ableitungsnut auf dem Verbindungsteil und auf einem Abstand von weniger als 1 cm auf dem Teil außerhalb des Implantats verlängert und angeordnet ist, um einen Überschuss an Zement oder Kleber sowie Luft, die beim Versiegeln oder Kleben vorhanden ist, abzuführen.

2. Einheit nach Anspruch 1, **dadurch gekennzeichnet, dass** die Nut oder die Nuten (17), die sich auf dem Teil außerhalb des Implantats verlängert/verlängern, sich auf einem Abstand verlängert/verlängern, der zwischen 2 und 3 cm liegt.

3. Einheit nach Anspruch 1 oder 2, **dadurch gekennzeichnet, dass** der Hohlraum ein Innengewinde umfasst, das sich auf mindestens einem Teil der Tiefe des Hohlraums erstreckt.

4. Einheit nach einem der Ansprüche 1 bis 3, **dadurch gekennzeichnet, dass** der Hohlraum eine Rückhalteauskehlung (7) umfasst, die an seiner inneren Wand angebracht und angeordnet ist, um ein Hilfselement aufzunehmen, das einen Teil eines Dorns (20) ist, der angeordnet ist, um das Implantat zurückzuhalten.

5. Einheit nach Anspruch 4, **dadurch gekennzeichnet, dass** die Rückhalteauskehlung (7) zwischen dem Eingangsabschnitt und dem Innengewinde platziert ist.

6. Einheit nach einem der Ansprüche 1 bis 5, **dadurch gekennzeichnet, dass** das Implantat eine im Wesentlichen zylindrisch-konische Geometrie aufweist, wobei sich der Hohlraum auf koaxiale Weise zu einer zentralen Achse des Implantats erstreckt.

7. Einheit nach einem der Ansprüche 1 bis 6, **dadurch gekennzeichnet, dass** der Teil außerhalb des Implantats eine kegelstumpfförmige Geometrie aufweist.

8. Einheit nach Anspruch 7, **dadurch gekennzeichnet, dass** der Teil außerhalb des Implantats auf einem Teil seiner Länge abgeschrägt ist.

9. Einheit nach einem der Ansprüche 1 bis 3, **dadurch gekennzeichnet, dass** der Teil außerhalb des Implantats mit einer sphärischen Befestigung ausgestattet ist.

10. Einheit nach einem der Ansprüche 1 bis 9, **dadurch gekennzeichnet, dass** das Implantat entweder aus Metall oder aus Keramik oder aus einem Verbundmaterial oder aus Peek oder aus einer Kombination dieser Materialien hergestellt ist, wobei das Protheseelement entweder aus Metall oder aus Keramik oder aus Peek oder aus einem ausbrennbaren Material oder aus einem Verbundmaterial oder aus einer Kombination dieser Materialien hergestellt ist.

11. Einheit nach einem der Ansprüche 1 bis 10, **dadurch gekennzeichnet, dass** sie auch einen Bohrer (50) umfasst, der ein Profil aufweist, das sich dem Implantat anpasst.

12. Einheit nach Anspruch 11, **dadurch gekennzeichnet, dass** der Bohrer (50) einen oberen Teil umfasst, der mit einer Reibahle ausgestattet ist.

13. Einheit nach Anspruch 11 oder 12, **dadurch gekennzeichnet, dass** der Bohrer eine erste und eine zweite Klinge umfasst, die im Wesentlichen senkrecht zueinander angeordnet sind, wobei ein Ende der zweiten Klinge mit Bezug auf ein Ende der ersten Klinge versetzt ist.

14. Einheit nach einem der Ansprüche 1 bis 3, **dadurch gekennzeichnet, dass** sie auch eine Dichtschraube (30) umfasst, die einen Schraubengang aufweist, der angeordnet ist, um in das Innengewinde geschraubt zu werden.

15. Einheit nach einem der Ansprüche 1 bis 3, **dadurch gekennzeichnet, dass** sie auch eine Heilungsschraube (40) umfasst, die einen Schraubengang aufweist, der angeordnet ist, um in das Innengewinde geschraubt zu werden.

16. Einheit nach Anspruch 1 oder 2, **dadurch gekennzeichnet, dass** sie auch einen Bohrer (20) umfasst, die einen Kopf aufweist, der als Polygon konfiguriert und angeordnet ist, um in den Eingangsabschnitt des Hohlraums eingeführt zu werden.

17. Einheit nach Anspruch 4 oder 5, **dadurch gekennzeichnet, dass** sie auch einen Bohrer (20) umfasst, der einen Aufnahmekopf aufweist, der angeordnet ist, um in die Rückhalteaussparung des Zahnimplantat eingeführt zu werden.

18. Einheit nach Anspruch 14 oder 15, **dadurch gekennzeichnet, dass** sie auch einen Bohrer (20) umfasst, der ein Ende aufweist, das mit einem Aufnahmeelement (24) ausgestattet ist, das angeordnet ist, um in der Dichtschraube (30) oder die Heilungsschraube (40) einzugreifen.

## Claims

1. Assembly of a dental implant (1) and a prosthetic element (10), which dental implant comprises a body arranged to be implanted into the jawbone, which prosthetic element comprises an intra-implant part (12) and an extra-implant part (13), which body comprises an internal cavity (5) provided for receiving the intra-implant part of the prosthetic element, which prosthetic element being a single piece element of which the intra-implant part is formed by a tenon arranged to be sealed or glued in the cavity, said cavity having an entrance section (8) configured as a polygon (9), said prosthetic element comprising at a height of the junction between the intra- and extra-implant parts a junction part (16) configured as a polygon in such a manner that the junction part is provided to fit in the entry section, said intra-implant part having a smooth wall and is provided with at least one discharge groove (17), **characterised in that** the extra-implant part is configured in the form of an attachment member arranged so as to apply a dental prosthesis directly thereto, the at least one discharge groove further extends over said junction part and over a distance of less than 1 cm over the extra-implant part and is provided for clearing a surplus of cement or glue as well as air which is present at the sealing or gluing.

2. Assembly as claimed in claim 1, **characterised in that** the or the groove(s) (17) further extending over the extra-implant part extend(s) over a distance situated between 2 and 3 mm.

3. Assembly as claimed in claim 1 or 2 **characterised in that** said cavity comprises an internal tapping that extends over at least part of the depth of the cavity.

4. Assembly as claimed in anyone of the claims 1 to 3, **characterised in that** said cavity comprises a retention groove (7) applied in its internal wall and arranged to receive an ancillary element forming part of a spindle (20) arranged to hold the implant.

5. Assembly as claimed in claim 4, **characterised in that** said retention groove (7) is placed between the entrance section and the internal tapping.

6. Assembly as claimed in anyone of the claims 1 to 5, **characterised in that** said implant has an essentially cylindro-conical geometry, said cavity extending coaxially with a central axis of the implant.

7. Assembly as claimed in anyone of the claims 1 to 6, **characterised in that** the extra-implant part has a frustoconical geometry.

8. Assembly as claimed in claim 7, **characterised in that** the extra-implant part is bevelled over part of its length.

9. Assembly as claimed in anyone of the claims 1 to 3, **characterised in that** the extra-implant part is provided with a spherical attachment.

10. Assembly as claimed in anyone of the claims 1 to 9, **characterised in that** said implant is manufactured either from metal, or ceramic, or a composite material, or PEEK, or a combination of these materials, said prosthetic element is manufactured either from metal, or ceramic, or PEEK, or a calcinable material, or a composite material, or a combination of these materials.

11. Assembly as claimed in anyone of the claims 1 to 10, **characterised in that** it also comprises a drill (50) having a profile matching that of the implant.

12. Assembly as claimed in claim 11, **characterised in that** said drill (50) comprises a top part provided with a reamer.

13. Assembly as claimed in claim 11 or 12, **characterised in that** said drill comprises a first and a second blade placed substantially perpendicular to each other, one end of the second blade being offset with respect to an end of the first blade.

14. Assembly as claimed in anyone of the claims 1 to 3, **characterised in that** it also comprises a covering screw (30) having a screw thread arranged so as to be screwed into the tapping.

15. Assembly as claimed in anyone of the claims 1 to 3, **characterised in that** it also comprises a healing screw (40) having a screw thread arranged to be screwed into the tapping.

16. Assembly as claimed in claim 1 or 2, **characterised in that** it also comprises a spindle (20) having a head configured as a polygon and provided for being introduced in the entrance section of the cavity.

17. Assembly as claimed in claim 4 and 5, **characterised in that** it also comprises a spindle (20) having a gripping head provided for being inserted in the retention groove of the dental implant.

18. Assembly as claimed in claim 14 or 15, **characterised in that** it also comprises a spindle (20) having an end provided with a gripping element (24), provided for gripping in said cover screw (30) or healing screw (40).
